# EUROPEAN PATENT APPLICATION

(11) **EP 4 790 886 A1**
(43) Date of publication of application: **12.08.2026**
(21) Application number: 25804964.2
(22) Date of filing: 04.08.2025
(51) Int. Cl.: H02M 7/48, H02M 7/06

(54) **POWER CONVERSION DEVICE AND AIR-CONDITIONING DEVICE**

(30) Priority: 30.09.2024 JP 2024171869
(71) Applicant: DAIKIN INDUSTRIES, LTD., Osaka-Shi, Osaka 530-0001 (JP)
(72) Inventor: HIROSE, Naoki, Osaka-Shi, Osaka 530-0001 (JP); DOI, Hirotaka, Osaka-Shi, Osaka 530-0001 (JP); TANIMUKAI, Kazuma, Osaka-Shi, Osaka 530-0001 (JP); YAMAMOTO, Takumi, Osaka-Shi, Osaka 530-0001 (JP)
(74) Representative: Hoffmann Eitle
(86) International application number: PCT/JP2025/027501
(87) International publication number: WO 2026/070032

(57) **Abstract**

A power conversion apparatus includes: a rectifier circuit configured to rectify AC power from a three-phase AC power source; an inverter circuit configured to modulate a voltage rectified by the rectifier circuit based on a carrier frequency, convert the rectified voltage back to a voltage of a predetermined frequency, and apply the voltage to a motor; a first capacitor provided between the rectifier circuit and the inverter circuit and having a capacitance satisfying predetermined conditions; and a composite coil provided between the three-phase AC power source and the first capacitor and having both common-mode inductance and normal-mode inductance. The coupling coefficient between the respective windings of the composite coil is 0.85 or more and less than 1. The carrier frequency is 17.7 kHz or higher.

## Description

### Technical Field

The present disclosure relates to a power conversion apparatus and an air-conditioning apparatus.

### Background Art

Patent Literature 1 discloses a power conversion apparatus including a rectifier circuit, an inverter circuit, a capacitor, and a reactor. The rectifier circuit rectifies AC power supply, and the inverter circuit converts the voltage rectified by the rectifier circuit back into an AC voltage of a predetermined frequency and applies it to a motor having a maximum power consumption of 2 kW or more.

### Citation List

### Patent Literature

Patent Literature 1: Japanese Patent Application Laid-Open Publication No. 2019-088090

### Summary of Invention

### Technical Problem

In a power conversion apparatus, it is necessary to eliminate both common-mode noise and normal-mode noise. However, separately providing a common-mode choke coil for eliminating common-mode noise and a normal-mode choke coil for eliminating normal-mode noise makes it difficult to reduce the size of the power conversion apparatus.

It is an object of the present disclosure to provide a smaller power conversion apparatus and the like.

### Solution to Problem

A power conversion apparatus according to a first aspect includes: a rectifier circuit configured to rectify alternating current (AC) power from a three-phase AC power source; an inverter circuit configured to modulate the voltage rectified by the rectifier circuit based on a carrier frequency fc ([Hz]), convert the rectified voltage back to a voltage of a predetermined frequency, and apply the voltage to a motor having a maximum power consumption Pmax ([W]) of 2 kW or more; a capacitor provided between the rectifier circuit and the inverter circuit, the capacitor having a capacitance Cn ([F]) satisfying Equations (1) and (2) with respect to an AC voltage Vac ([V]) of the three-phase AC power source and the maximum power consumption Pmax; and a composite coil provided between the three-phase AC power source and the capacitor. The carrier frequency fc is 17.7 kHz or higher. The composite coil includes a plurality of windings wound around a winding section of a core and has a common-mode inductance component that functions as a common-mode choke coil and a normal-mode inductance component that functions as a normal-mode choke coil. A coupling coefficient between the windings of respective phases of the composite coil is 0.85 or more and less than 1. The composite coil has the normal-mode inductance component Ln ([H]) satisfying Equation (3): ${C}_{n} \leq 350 \times {10}^{- 6} \times \frac{{P}_{max}}{{V}_{ac}^{2}}$ $100 \times {10}^{- 6} \times \frac{{P}_{max}}{{V}_{ac}^{2}} \leq {C}_{n}$ $\frac{1}{2 π \sqrt{{L}_{n} {C}_{n}}} \leq K ⋅ {f}_{c}$ where K = 0.25.

This feature makes it possible to provide a smaller power conversion apparatus and the like.

In the power conversion apparatus according to a second aspect, only coils that are present between the three-phase AC power source and the capacitor may be either the composite coil alone, or the composite coil together with a coil having a plurality of windings wound around a core. This feature, achieved by the use of the composite coil, makes it possible to eliminate a coil having only normal-mode inductance between the power source and the capacitor.

In the power conversion apparatus according to a third aspect, an (L-I) characteristic of normal-mode inductance of the composite coil may be such that a value of the normal-mode inductance corresponding to a value of input current to the power conversion apparatus at the time when overcurrent protection of the inverter circuit is activated is 90% or more of a value of the normal-mode inductance corresponding to a value of input current I1 ([A]) to the power conversion apparatus at the time of maximum power consumption, the input current I1 being expressed by Equation (4) assuming a power factor φ = 0.95: $I 1 = \frac{Pmax}{\sqrt{3 VacΦ}}$

This feature enables the composite coil to maintain its normal-mode inductance without undergoing magnetic saturation even when a current twice the rated current flows through it.

In the power conversion apparatus according to a fourth aspect, the windings of respective phases of the composite coil may be made of a same material and have a same wire diameter, and may be wound around the winding section of the core while being separated from each other. This feature makes it possible to reduce the coupling coefficient between the windings of respective phases of the composite coil.

In the power conversion apparatus according to a fifth aspect, the capacitor may be a film capacitor or a ceramic capacitor. This feature makes it possible to provide a capacitor with excellent high-frequency characteristics.

In the power conversion apparatus according to a sixth aspect, when inductance of one phase winding of the composite coil in an air-core condition is defined as La, total inductance Lb corresponding to two phases of the normal-mode inductance of the composite coil may be given by Equation (5): $Lb > 2 \times La$

This feature makes it possible to achieve a higher normal-mode inductance than the air--core La by utilizing leakage flux.

In the power conversion apparatus according to a seventh aspect, the motor may be mounted in a compressor of an air conditioner. This feature makes it possible to provide a smaller, lighter, and more cost-effective air conditioner.

An air-conditioning apparatus according to an eighth aspect can provide an air-conditioning apparatus equipped with the power conversion apparatus. This feature makes it possible to provide a smaller, lighter, and more cost-effective air conditioner.

### Brief Description of Drawings

FIG. 1 illustrates a circuit configuration of the power conversion apparatus according to an exemplary embodiment.
FIG. 2 illustrates the generation of normal-mode inductance.
FIG. 3A illustrates noise terminal voltages of a composite coil 110 of the exemplary embodiment and a conventional common-mode choke coil (CMC) at an input current of 2.5 Arms. FIG. 3B illustrates noise terminal voltages of the conventional CMC and the composite coil of the exemplary embodiment at an input current of 29 Arms.
FIG. 4A is a table showing calculation conditions for the inductance and coupling coefficient, FIG. 4B illustrates a required gain G of a common-mode filter at each carrier frequency, calculated from withstand voltage test results, and FIG. 4C illustrates changes in the maximum value of normal-mode inductance and the minimum value of common-mode inductance as a function of the carrier frequency.
FIG. 5 illustrates the coupling coefficient and the volume of the power conversion apparatus with respect to carrier frequency.
FIG. 6A is a perspective view of the composite coil according to the exemplary embodiment, and FIG. 6B illustrates winding methods for the coil.
FIG. 7A illustrates a case where the composite coil is not directly connected to a printed circuit board, and FIG. 7B illustrates a case where the composite coil is directly connected to a printed circuit board.
FIG. 8 illustrates an example circuit configuration of the power conversion apparatus in which a second capacitor is disposed.
FIG. 9A illustrates an air-core coil, and FIG. 9B illustrates leakage inductance.
FIG. 10 illustrates an example circuit configuration of a comparative power conversion apparatus.

### Description of Embodiments

Exemplary embodiments of the present disclosure will now be described in detail with reference to the appended drawings.

### <Comparative Power Conversion Apparatus 11>

First, a comparative power conversion apparatus 11 will be described.

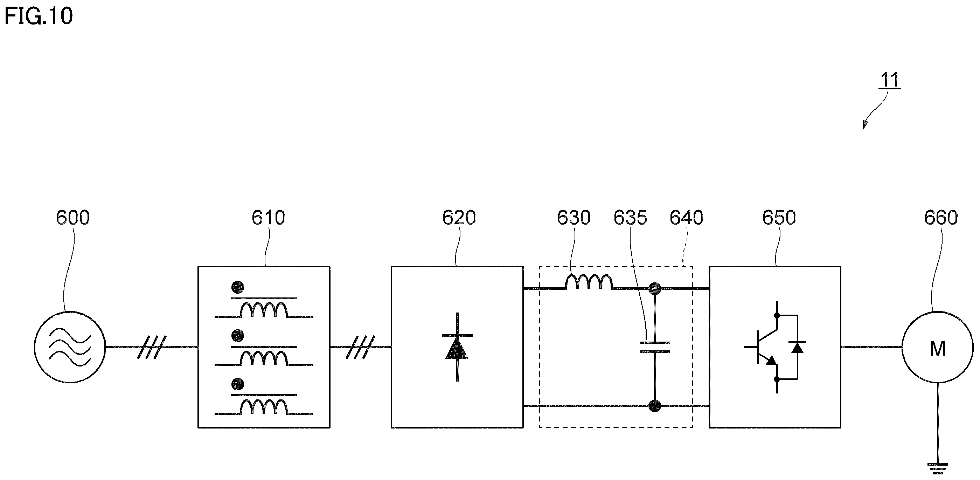

FIG. 10 illustrates an example circuit configuration of the comparative power conversion apparatus 11. The power conversion apparatus 11 includes a rectifier circuit 620, a DC link section 640, and an inverter circuit 650. The power conversion apparatus 11 converts power supplied from a three-phase AC power source 600 into power of a predetermined frequency, and supplies the converted power to a motor 660. Here, the motor 660 is a so-called DC motor. In one example, the motor 660 drives a compressor provided in a refrigerant circuit of an air-conditioner.

The rectifier circuit 620 is connected to the AC power source 600 via a common-mode choke coil 610 (described below). The common-mode choke coil may also be referred to as a CMC. The rectifier circuit 620 rectifies an AC voltage output from the AC power source 600 into a DC voltage and supplies it to the DC link section 640. The rectifier circuit 620 is configured as, for example, a diode bridge circuit.

In order to suppress common-mode noise, it is effective to provide the common-mode choke coil 610 between the AC power source 600 and the rectifier circuit 620 in the power conversion apparatus 11.

The DC link section 640 is a DC portion between the rectifier circuit 620 and the inverter circuit 650. The DC link section 640 includes a positive (+) line and a negative (-) line. A capacitor 635 is provided between the positive (+) line and the negative (-) line of the DC link section 640. In the power conversion apparatus 11, a reactor 630 is provided on the positive (+) line. The reactor 630 is provided between the rectifier circuit 620 and the inverter circuit 650.

In order to suppress normal-mode noise, it is effective to provide the reactor 630 between the rectifier circuit 620 and the inverter circuit 650 in the power conversion apparatus 11.

The reactor 630 has inductance L [H]. The reactor 630 is also referred to as a normal-mode choke coil. Normal-mode noise can be suppressed by the reactor 630.

The capacitor 635 is provided between the rectifier circuit 620 and the inverter circuit 650, and is connected in parallel with the rectifier circuit 620 and the inverter circuit 650. The capacitor 635 is connected at its one end to the positive output terminal of the rectifier circuit 620 via the reactor 630, and is connected at its other end to the negative output terminal of the rectifier circuit 620. The DC voltage developed across the capacitor 635 is applied to the input terminals of the inverter circuit 650. The input node of the inverter circuit 650 is connected in parallel with the capacitor 635 of the DC link section 640.

Noise generated in the power conversion circuit will now be described in detail. Such noise generated in the power conversion circuit includes normal-mode noise and common-mode noise.

Common-mode noise refers to noise that is generated by a power conversion circuit, which is electrically connected to a power source via multiple power lines and generates noise, and returns to the power converter through the multiple power lines via the capacitance between the power conversion circuit and the reference ground, as well as via the power source connected to the reference ground.

The common-mode choke coil 610 is a noise filter for suppressing common-mode noise. The winding directions of the coils of respective phases of the common-mode choke coil 610 are aligned in the same direction. As a result, magnetic flux caused by normal-mode noise is canceled between the phases.

Normal-mode noise refers to noise that is generated by a power conversion circuit, which is electrically connected to a power source via multiple power lines and generates noise, and returns to the power conversion circuit through another power line via one of the power lines and the power source. The reactor 630 is also referred to as a normal-mode choke coil, which suppresses normal-mode noise.

The capacitor 635 suppresses switching noise and other noise generated by the inverter circuit 650. The capacitor 635 forms an LC filter with the reactor and suppresses normal-mode noise among the switching noise.

As described above, it has been necessary to provide both the common-mode choke coil 610 and the reactor 630 in the power conversion apparatus 11.

However, separately providing the common-mode choke coil 610 and the reactor 630 makes it difficult to reduce the size of the power conversion apparatus. In particular, the reactor 630 is a component made by winding an electric wire into a coil shape and requires an installation space, which has made it difficult to reduce the size of the power conversion apparatus.

### <Configuration of Power Conversion Apparatus According to Present Embodiment>

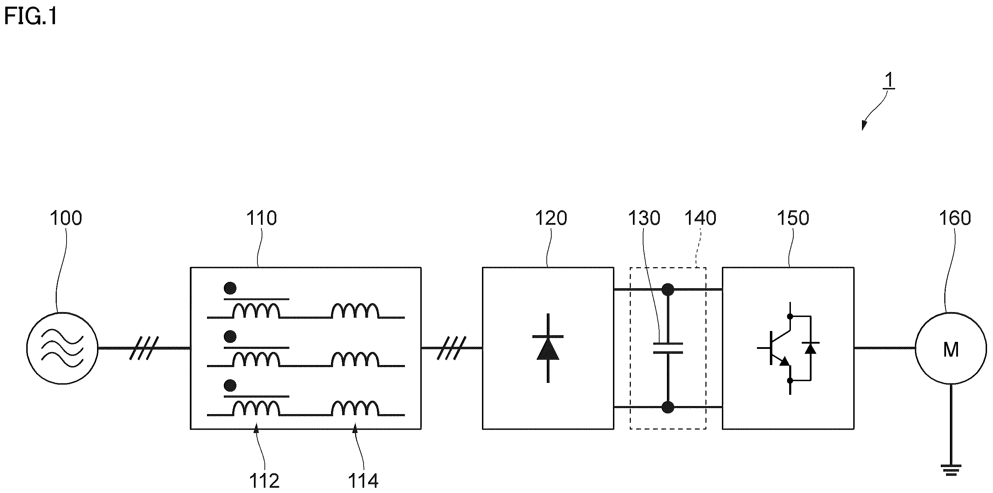

FIG. 1 illustrates an example circuit configuration of the power conversion apparatus 1 according to the present embodiment. The power conversion apparatus 1 includes a composite coil 110, a rectifier circuit 120, a DC link section 140, and an inverter circuit 150. The circuit configuration of the power conversion apparatus 1 differs from that of the comparative power conversion apparatus 11 (see FIG. 10) in that the common-mode choke coil 610 of this comparative apparatus is replaced with the composite coil 110 and the DC link section 140 does not include the reactor 630. The power conversion apparatus 1 converts power supplied from a three-phase AC power source 100 into power of a predetermined frequency and supplies the converted power to a motor 160. Here, the motor 160 is a DC motor.

The AC power source 100 supplies power to the power conversion apparatus 1 via a harness or the like. Specifically, the AC power source 100 is a so-called commercial three-phase AC power source, and supplies an AC voltage Vac [V] having a frequency of 50 Hz, 60 Hz, or the like.

The composite coil 110 mainly functions as a common-mode choke coil. However, its leakage flux also produces normal-mode inductance, enabling it to function as a normal-mode choke coil. As shown in the equivalent circuit of the composite coil 110 in FIG. 1, the composite coil 110 has both the function of a common-mode choke coil 112 and the function of a normal-mode choke coil 114. Imparting the function of a normal-mode choke coil to the composite coil 110 makes it possible to eliminate the reactor 630, which serves as a normal-mode choke coil in the power conversion apparatus 11. This can reduce the space occupied by the conventional reactor 630, helping reduce the size of the power conversion apparatus.

The composite coil 110 is provided with the additional function as a normal-mode choke coil by increasing leakage flux through adjustment to the coupling coefficient of the common-mode choke coil. The physical configuration of the composite coil 110 will be described below.

The rectifier circuit 120 is connected to the AC power source 100 via the composite coil 110, and converts the AC voltage Vac ([V]) output from the AC power source 100 into a DC link voltage Vdc ([V]).

The rectifier circuit 120 is configured as, for example, a diode bridge circuit. The diode bridge circuit is configured as a circuit including six diodes (D1 to D6; not shown) connected in a bridge configuration. The rectifier circuit 120 rectifies the AC voltage Vac output from the AC power source 100 and supplies the rectified voltage to the DC link section 140.

The DC link section 140 is provided between the rectifier circuit 120 and the inverter circuit 150 and is configured with a capacitor 130. The capacitor 130 is connected in parallel with the rectifier circuit 120 and the inverter circuit 150. The capacitor 130 is connected at its one end to the positive output terminal of the rectifier circuit 120 and is connected at its other end to the negative output terminal of the rectifier circuit 120. The DC voltage developed across the capacitor 130 (hereinafter also referred to as a DC link voltage Vdc ([V])) is applied to the input terminals of the inverter circuit 150. The inverter circuit 150 may be, for example, an inverter of a compressor.

Rectification of the AC voltage Vac ([V]) by the rectifier circuit 120 results in a pulsating voltage due to the nature of the AC voltage Vac. The capacitor 130 does not have a function of smoothing the ripple in the voltage waveform rectified by the rectifier circuit 120. On the other hand, the capacitor 130 has a function of smoothing the normal-mode noise among the switching noise from the inverter circuit 150. This can reduce the capacitance of the capacitor 130. Furthermore, power factor and other characteristics can be improved by controlling switching of the inverter circuit 150.

The above expression "the capacitor 130 does not have a function of smoothing the ripple in the voltage waveform rectified by the rectifier circuit 120" means that, when the motor is driven at rated output, 80% or more of the ripple component contained in the waveform of the rectified AC voltage remains across the capacitor.

Since the capacitor 130 does not have a function of smoothing the ripple in the voltage waveform rectified by the rectifier circuit 120, a capacitor with a small capacitance can be employed as the capacitor 130. However, due to the small capacitance C ([F]) of the capacitor 130, the DC link voltage Vdc ([V]) of the DC link section 140 exhibits ripple. For example, when the AC power source 100 is a three-phase AC power source, the DC link voltage Vdc ([V]) exhibits ripple at a frequency six times the power supply frequency. Such a capacitor 130 is implemented by a capacitor other than electrolytic capacitors, for example by a film capacitor or a ceramic capacitor.

The present inventors examined optimization of the capacitance C ([F]) of the capacitor 130 and obtained the following findings. First, for a three-phase AC motor having a maximum power consumption Pmax ([W]) of 2 kW or more, it was found that using a capacitor 130 with a capacitance Cn ([F]) satisfying the condition of the following Equation (1) can reduce the 5th and 7th harmonics from the rectifier circuit 120.
[Math. 1] ${C}_{n} \leq 350 \times {10}^{- 6} \times \frac{{P}_{max}}{{V}_{ac}^{2}}$

In addition, the present inventors found that a capacitor 130 with a capacitance C ([F]) satisfying the condition of the following Equation (2) can maintain the function of smoothing the normal-mode noise among the switching noise from the inverter circuit 150, even if the capacitance C ([F]) of the capacitor 130 is reduced. It was also found that using such a capacitor 130 can help reduce the size of the normal-mode choke coil.
[Math. 2] $100 \times {10}^{- 6} \times \frac{{P}_{max}}{{V}_{ac}^{2}} \leq {C}_{n}$

Based on input of gate control signals, the inverter circuit 150 converts the DC link voltage Vdc rectified by the rectifier circuit 120 back into an AC voltage of a predetermined frequency and applies it to the motor 160. The input node of the inverter circuit 150 is connected in parallel with the capacitor 130 of the DC link section 140. The inverter circuit 150 switches the output of the DC link section 140 to convert it into a three-phase AC voltage.

In order to output a three-phase AC voltage to the motor 160, the inverter circuit 150 includes six switching elements SW1 to SW6 (not shown). The inverter circuit 150 switches the DC link voltage Vdc input from the DC link section 140 by on/off operation of the switching elements SW1 to SW6 and converts the voltage into a three-phase AC voltage and supplies it to the motor 160. Each of the switching elements SW1 to SW6 is implemented by, for example, an insulated gate bipolar transistor (IGBT).

The on/off operation of the switching elements of the inverter circuit 150 is controlled by a control circuit (not shown). The control circuit controls the on/off operation of each switching element to drive the motor 160. In this case, the control circuit outputs gate control signals for turning on and off each switching element of the inverter circuit 150 such that the currents of the respective phases (U-, V-, and W-phases) flowing through the motor 160 exhibit ripple in synchronization with ripple in the DC link voltage Vdc. The control circuit generates the gate control signals using a carrier having a carrier frequency fc ([Hz]).

In the above embodiment, a composite coil 110 and a capacitor 130 having a normal-mode inductance Ln ([H]) and a capacitance Cn ([F]), respectively, satisfying the condition of the following Equation (3) may be adopted. The investigations by the present inventors revealed that the use of such a composite coil 110 and capacitor 130 satisfying this condition can help suppress the normal-mode noise among the switching noise generated by the inverter circuit 150. Here, fc ([Hz]) denotes the carrier frequency, and the value of the constant K is 0.25.
[Math. 3] $\frac{1}{2 π \sqrt{{L}_{n} {C}_{n}}} \leq K ⋅ {f}_{c}$

The inverter circuit 150 of the present embodiment is capable of suppressing harmonics through waveform control and thus has an inherent capability to reduce the size of the reactor. Increasing the carrier frequency helps reduce the size of the reactor. On the other hand, increasing the carrier frequency leads to increased common-mode noise in the common-mode choke coil, and thus the common-mode choke coil itself needs to be made larger. Increasing the frequency tends to make the reactor smaller and the common-mode choke coil larger. Reducing the size of the reactor allows it to be mounted on a circuit board. Furthermore, using the composite coil of the present embodiment makes it possible to utilize the normal-mode inductance, thereby allowing the reactor to be replaced.

In the circuit configuration shown in FIG. 1, the composite coil 110 is disposed between the AC power source 100 and the rectifier circuit 120. In an alternative circuit configuration, the composite coil 110 may be disposed between the rectifier circuit 120 and the capacitor 130.

In the circuit configuration shown in FIG. 1, the only coils present between the three-phase AC power source 100 and the capacitor 130 are the composite coil 110 alone. However, in addition to the composite coil 110, a detection coil as a current transformer (CT), which is made by winding multiple windings around a core, may also be present between the three-phase AC power source 100 and the capacitor 130. Accordingly, in the circuit configuration of the power conversion apparatus 1 of the present embodiment, the coil(s) present between the three-phase AC power source 100 and the capacitor 130 are either the composite coil 110 alone, or the composite coil 110 together with another coil with multiple windings wound around a core. A case such as a bobbin may be used to wind the windings around the core.

The composite coil 110 is provided with the additional function as a normal-mode choke coil by increasing leakage flux through adjustment to the coupling coefficient of the common-mode choke coil.

In general, a mutual inductance circuit with two windings formed on a single toroidal core is a magnetically coupled circuit, in which the magnetic flux of the primary winding links with the secondary winding. The coupling coefficient k, which represents the degree of magnetic coupling between the primary and secondary windings, is defined by Equation (6).
[Math. 6] $k = \frac{M}{\sqrt{{L}_{1} {L}_{2}}}$

M represents the mutual inductance (inductance due to the magnetic flux passing through both the primary and secondary windings). L1 is the inductance due to the magnetic flux passing through the primary winding, consisting of the sum of the inductance due to the magnetic flux passing through both the primary and secondary windings and the inductance due to the magnetic flux passing through only the primary winding. L2 is the inductance due to the magnetic flux passing through the secondary winding, consisting of the sum of the inductance due to the magnetic flux passing through both the primary and secondary windings and the inductance due to the magnetic flux passing through only the secondary winding.

The composite coil 110 is configured such that, during operation, the leakage inductance corresponding to two phases becomes the inductance Ln required for the normal mode. Therefore, the normal-mode inductance required per phase is Ln/2. Accordingly, by substituting L1 = L2 = Lc + Ln/2 and M = Lc into Equation (6), the coupling coefficient is expressed by Equation (7).
[Math. 7] $k = \frac{{L}_{c}}{{L}_{c} + \frac{{L}_{n}}{2}}$

Without magnetic flux leakage (i.e., leakage flux = 0), the leakage inductance Ln is 0 (Ln = 0), and the coupling coefficient k is 1. The composite coil 110 is configured such that leakage flux is formed (Ln > 0), resulting in the coupling coefficient becoming less than 1.

A typical common-mode choke coil is designed to have a high coupling coefficient k and low leakage flux. In a typical common-mode choke coil, the leakage inductance component is about 0.2% of the common-mode inductance value.

In contrast, the composite coil 110 is intentionally designed to have a low coupling coefficient k, so that the inductance due to leakage flux can be utilized in place of a reactor. In the composite coil 110, the leakage inductance component is about 1% of the common-mode inductance value, and is utilized as a reactor. To reduce the coupling coefficient k, it is necessary to increase the size of the core. On the other hand, reducing the coupling coefficient lowers the value of the common-mode inductance Lc. To maintain the same level of common-mode inductance as a conventional common-mode choke coil, it is necessary to add more coil windings. For this reason, the composite coil 110 needs to be slightly larger in order to achieve the same level of common-mode inductance as a conventional common-mode choke coil. Especially in high-current applications, the composite coil may become larger, which may pose a challenge for circuit board mounting. As will be described below, increasing the carrier frequency of the inverter circuit 150 makes it possible to reduce the normal-mode inductance value. To strike a balance with the demand for component miniaturization, it is preferable to set the leakage flux of the composite coil 110 to about 1%.

Conventional power conversion apparatuses have contained two coils with different purposes: a common-mode choke coil and a normal-mode choke coil. However, the composite coil can provide both the functions of a conventional common-mode choke coil and a conventional normal-mode choke coil. Thus, even if the composite coil 110 is made slightly larger in order to achieve the same level of common-mode inductance as a conventional common-mode choke coil, the power conversion apparatus 1 as a whole can still be reduced in size by elimination a reactor.

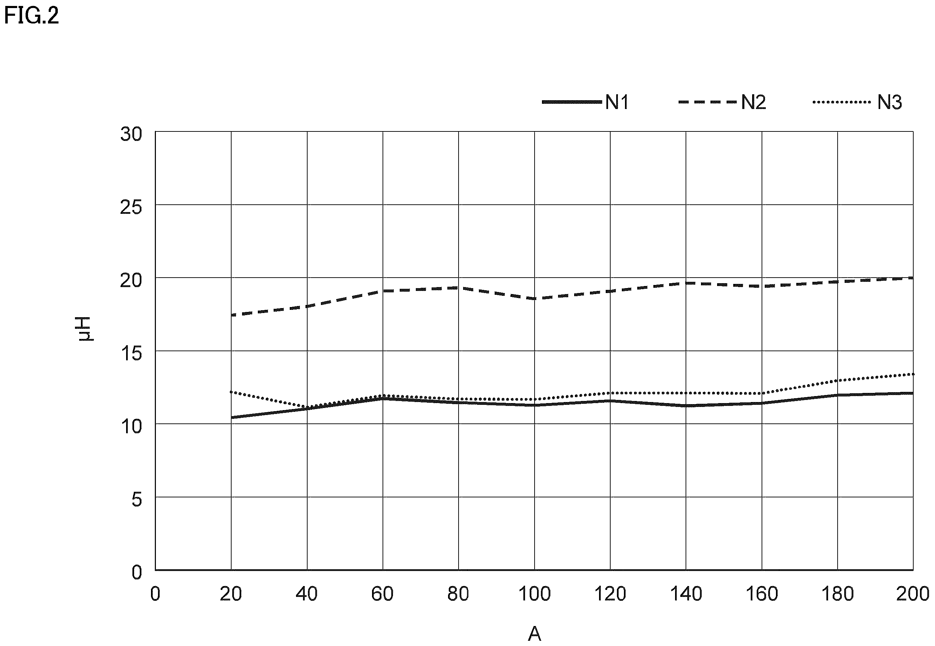

FIG. 2 illustrates the generation of normal-mode inductance. In the case of a conventional common-mode choke coil, when normal-mode current is applied to two of the three-phase coils while the coil of the remaining one phase is left unenergized, the magnetic fluxes cancel each other out, resulting in zero normal-mode inductance. In the composite coil, the leakage flux forms a magnetic path, resulting in the generation of normal-mode inductance. The graph of FIG. 2 illustrates values of the small normal-mode inductance generated by the magnetic path of leakage flux in a coil where the three-phase windings N1, N2, and N3 are arranged in a single row on the core. The value of N2 is larger than those of N1 and N3. This is because N2 is positioned at the center of the three-phase windings and is thus influenced by the adjacent windings on both sides.

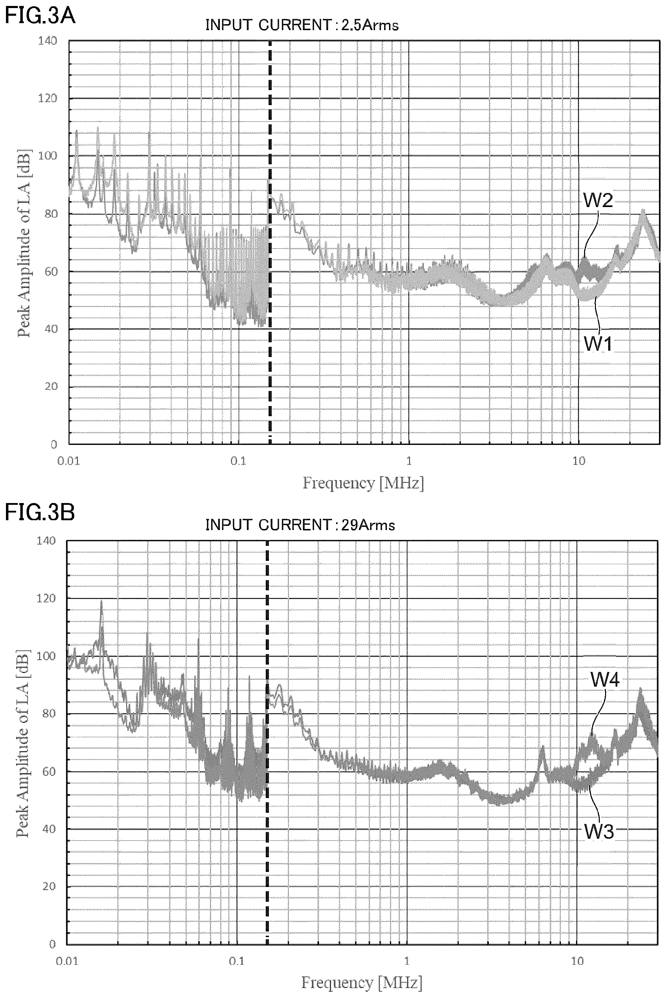

FIG. 3A illustrates noise terminal voltages when using the composite coil 110 of the present embodiment and when using a conventional CMC, at an input current of 2.5 Arms. The horizontal axis represents the frequency (MHz), and the vertical axis represents the noise terminal voltage. The waveform W1 represents the noise terminal voltage when using the composite coil 110, while the waveform W2 represents the noise terminal voltage when using the conventional CMC. Comparing the noise terminal voltage waveforms W1 and W2, they are almost identical at frequencies at or above 150 kHz. Thus, it can be confirmed that, at frequencies at or above 150 kHz, the composite coil 110 exhibits performance equivalent to that of the conventional CMC.

FIG. 3B illustrates noise terminal voltages when using a conventional CMC and when using the composite coil 110 of the present embodiment, at an input current of 29 Arms. Comparing the noise terminal voltage waveform W3 when using the composite coil and the noise terminal voltage waveform W4 when using the conventional CMC, it can be confirmed that, at frequencies at or above 150 kHz, the composite coil 110 exhibits performance equivalent to that of the conventional CMC.

From FIG. 3A and 3B, it can be confirmed that the composite coil exhibits performance equivalent to that of the conventional CMC at frequencies at or above 150 kHz, both when the input current is as low as 2.5 Arms and as high as 29 Arms.

The calculation of the normal-mode inductance Ln and the common-mode inductance Lc of the composite coil will now be described.

To calculate the normal-mode inductance Ln, first, the normal-mode capacitance Cn is obtained from the maximum power consumption Pmax and the AC voltage Vac. Then, the inductance Ln is determined using the obtained capacitance Cn and the carrier frequency fc.

Specifically, the capacitance Cn is determined using the above Equations (1) and (2), and then the normal-mode inductance Ln is determined using the above Equation (3).

To calculate the common-mode inductance Lc, first, the common-mode capacitance Cc is obtained from the test voltage Vt and the frequency f used in the withstand voltage test, as well as from the standard value I of leakage current. Then, the common-mode inductance Lc is determined using the obtained capacitance Cc, the filter gain G, and the filter frequency ff. The withstand voltage test is a regulatory condition that must be met in accordance with the standard; with no power supply voltage applied, a test voltage is applied, and the resulting current must be at or below the standard value.

Specifically, the common-mode capacitance Cc is first determined using Equation (8), which calculates the leakage current flowing during the withstand voltage test.
[Math. 8] $I = \frac{{V}_{t}}{j 2 {πfC}_{c}}$

Then, the common-mode inductance Lc is determined using Equation (9), which calculates the gain of the common-mode filter.
[Math. 9] $G = - 20 log \left|1-{\left(2{πf}_{f}\right)}^{2}{L}_{c}{C}_{c}\right|$

Once the normal-mode inductance Ln and the inductance Lc of the composite coil are calculated as described above, the coupling coefficient k can be calculated using Equation (7).

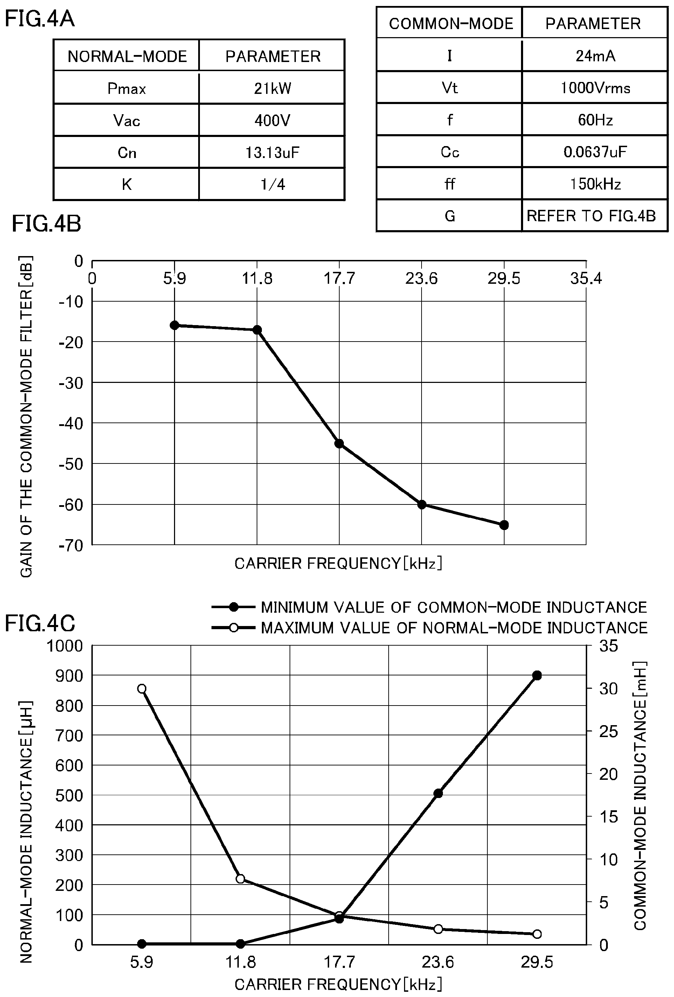

FIG. 4A is a table showing the parameters used as the basis for the above calculations.

The parameters related to the normal-mode equations are as follows: Pmax representing the maximum power consumption of the motor; Vac representing the AC voltage of the three-phase AC power source 100; Cn representing the capacitance of the normal-mode capacitor; and K representing a dimensionless constant. The parameters related to the common-mode equations are as follows: I representing the standard value used in the withstand voltage test; Vt representing the test voltage condition used in the withstand voltage test; f representing the frequency of the voltage applied in the withstand voltage test; Cc representing the capacitance of the common-mode filter capacitor (the second capacitor); ff representing the design frequency for the gain of the common-mode filter (limits are specified by the standard for frequencies at or above 150 kHz); and G representing the gain of the common-mode filter.

FIG. 4B illustrates the gain G of the common-mode filter required for each carrier frequency, calculated from the results of the withstand voltage test. FIG 4B shows that the gain G of the common-mode filter decreases rapidly when the carrier frequency is at or above 17.7 kHz. This is attributed to the presence of an inflection point around 17.7 kHz, which causes the common-mode inductance Lc to increase sharply in the region of carrier frequencies above 17.7 kHz.

FIG. 4C illustrates changes in the maximum value of the normal-mode inductance and the minimum value of the common-mode inductance as a function of the carrier frequency fc. The reason for obtaining the maximum value of the normal-mode inductance and the minimum value of the common-mode inductance is to determine the minimum value of the coupling coefficient.

In FIG. 4C, the vertical axis on the left represents the normal-mode inductance, the vertical axis on the right represents the common-mode inductance, and the horizontal axis represents the carrier frequency fc (kHz). The maximum value of the normal-mode inductance Ln decreases as the carrier frequency fc increases (see Equation (3)). In the region where the carrier frequency fc is below 17.7 kHz, the normal-mode inductance Ln is large. In the region where the carrier frequency fc is at or above 17.7 kHz, the maximum value of the normal-mode inductance Ln remains small, at or below 100 µH.

On the other hand, as the carrier frequency fc increases, the minimum required value of the common-mode inductance Lc tends to increase. There is an inflection point around 17.7 kHz. In the region where the carrier frequency is above 17.7 kHz, the minimum value of the common-mode inductance starts to increase sharply from 4 mH.

Under the assumption that the conditions specified by Equations (1), (2), and (3) related to the normal-mode inductance Ln, Equations (8) and (9) related to the common-mode inductance Lc, and Equation (7) for the coupling coefficient k are satisfied, the relationship between the coupling coefficient k and the carrier frequency fc was determined.

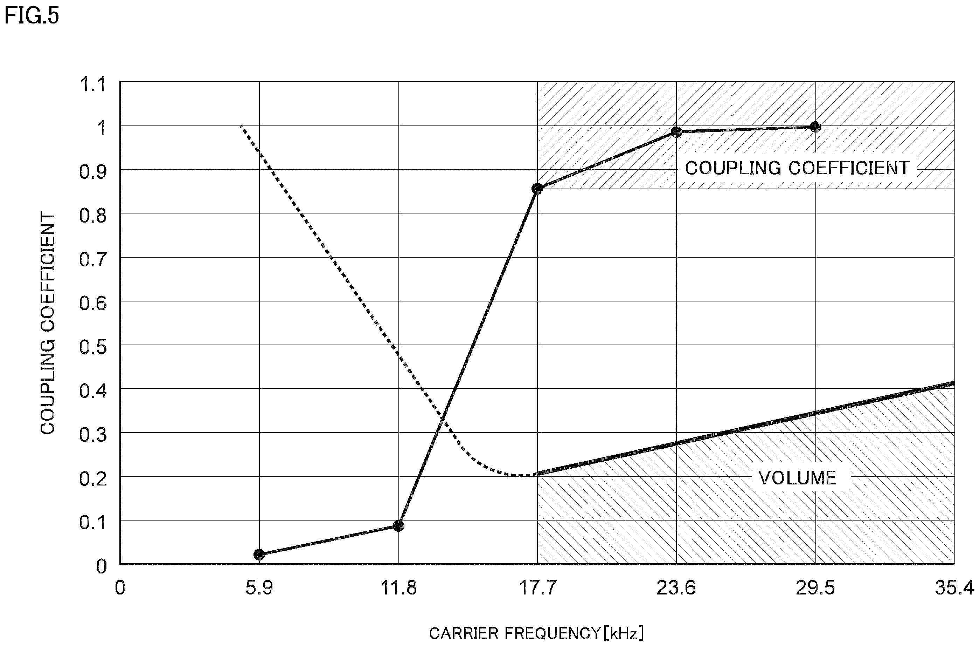

FIG. 5 illustrates the coupling coefficient and the volume of the power conversion apparatus with respect to the carrier frequency fc. The horizontal axis represents the carrier frequency fc (kHz). The vertical axis on the left represents the coupling coefficient k, and the vertical axis on the right represents the volume. Note that the volume represents the estimated trend, with the upper side corresponding to larger values and the lower side corresponding to smaller values.

Focusing on the change in the coupling coefficient k, it is approximately 0.02 at a carrier frequency fc of 5.9 kHz, and is approximately 0.09 at a carrier frequency of 11.8 kHz. When the carrier frequency reaches 17.7 kHz, the coupling coefficient k increases sharply to 0.85. Thereafter, the coupling coefficient k asymptotically approaches 1 as the carrier frequency increases.

We now focus on the change in the volume of the power conversion apparatus 1 with increase in the carrier frequency fc. In the region where the carrier frequency fc is below 17.7 kHz, a lower carrier frequency results in a smaller coupling coefficient, which increases the volume of the composite coil and leads to an increased size of the power conversion apparatus. In the region where the carrier frequency is above 17.7 kHz, the volume gradually increases; a higher carrier frequency requires a larger common-mode inductance, leading to an increased size of the composite coil.

From the above trend, it can be seen that in the region where the carrier frequency is at or above 17.7 kHz and the coupling coefficient is at or above 0.85, the composite coil can be reduced in size, which allows the power conversion apparatus to also be reduced in size.

Here, the characteristics of the normal-mode inductance of the composite coil will be described. Typically, inductance of a coil decreases as the value of current increases. In the composite coil, the degree of inductance reduction with respect to current is smaller than that of a typical coil. This rate of inductance reduction is prominently observed as the difference in inductance ratio between two cases: when the maximum input current is applied to the coil, and when the overcurrent protection of the inverter circuit is activated. The input current at the time when overcurrent protection is activated is greater than the rated current of the coil, and the rated current of the coil is greater than the maximum input current of the coil. Accordingly, the inductance at the time of overcurrent protection activation is smaller than that under the maximum input current. In a typical coil, the ratio of the inductance at the time of overcurrent protection activation to that under the maximum input current is small, less than 90%. In the composite coil 110 according to the present embodiment, this ratio is 90% or greater.

For a more quantitative discussion, given the AC voltage Vac (rms value) of the three-phase AC power source and the maximum power consumption Pmax, the maximum input current I1 under a power factor φ = 0.95 from the three-phase AC power source is expressed by Equation (4). $I 1 = \frac{Pmax}{\sqrt{3 VacΦ}}$

The inductance corresponding to the maximum input current I1 is defined as LCA.

When the overcurrent protection is activated, the overcurrent persists only for less than one cycle. So, if we define I2 as the rms value of a sinusoidal current matched to the peak value of the input current at the time of overcurrent protection activation is activated, then the inductance corresponding to I2 is defined as LCB.

In this case, the composite coil 110 of the present embodiment exhibits an ratio LCB/LCA of 0.9 or higher.

As described above, the (L-I) characteristic of the normal-mode inductance of the composite coil 110 is such that the value of the normal-mode inductance corresponding to the value I2 of the input current to the power conversion apparatus at the time when the overcurrent protection of the inverter circuit is activated is 90% or more of the value of the normal-mode inductance corresponding to the value of the input current I1 to the power conversion apparatus at the time of maximum power consumption, the input current I1 being expressed by Equation (4) assuming a power factor φ = 0.95.

If the normal-mode inductance of the reactor 630 in the power conversion apparatus 11 shown in FIG. 10 is reduced, the coil undergoes magnetic saturation under the application of a lightning surge, resulting in surge energy flowing directly into the inverter circuit 150.

When a magnetic material is used as in the case of a reactor, a large current flows during the application of a lightning surge, causing magnetic saturation and making it impossible to maintain the inductance. Once the inductance is lost, the path from the power source to the inverter circuit has no impedance, resulting in all the energy of the lightning surge being transferred to the inverter.

However, when leakage flux is used, the magnetic flux passes through air, so that no magnetic saturation occurs and the inductance can be maintained. In the power conversion apparatus 1 according to the present embodiment shown in FIG. 1, the inductance generated by the leakage flux is utilized as the normal-mode inductance. This allows the inductance value to be maintained even at current levels greater than the maximum operating current, preserving the inductive effect even during a lightning surge.

As described above, the composite coil can utilize the inductance generated by leakage flux as normal-mode inductance, making it possible to provide a power conversion apparatus with high resistance to large currents during lightning surge application.

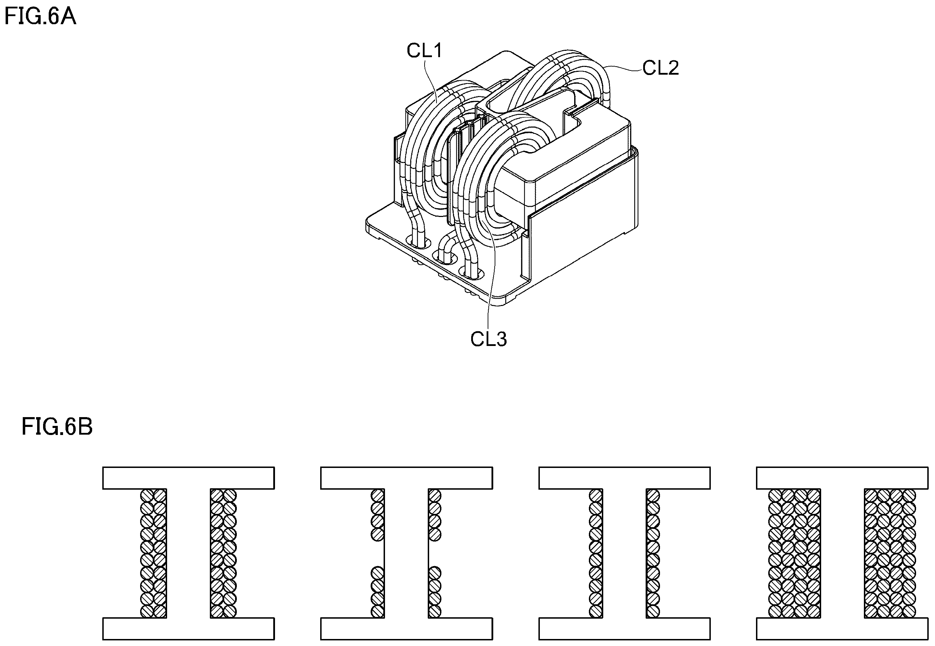

FIG. 6A is a perspective view of the composite coil according to the present embodiment, and FIG. 6B illustrates winding methods for the coil. The composite coil shown in FIG. 6A includes windings for three phases wound on the core material. All three-phase windings are made of the same material and have the same wire diameter. Using such windings made of the same material and with the same wire diameter facilitates the adjustment of inductance generated by the windings and the setting of the coupling coefficient.

As regards winding methods, FIG. 6B illustrates how windings for two phases are arranged, with the winding of each phase shown in a cross-section with hatching lines oriented in a different direction. From left to right in FIG. 6B, the winding methods include layered winding, separated winding (also referred to as split winding or sectional winding), bifilar winding, and sandwich winding. In the separated winding method, the windings of different phases are spaced from each other and do not overlap each other. In the separated winding method, the windings are wound around the winding section of the core while being separated from each other. Winding methods other than the separated winding method tend to result in a higher coupling coefficient. In the separated winding method, the distance between the windings of different phases is large and there is no overlap between them. Thus, the separated winding method results in a lower coupling coefficient. For this reason, the separated winding method is adopted for the composite coil according to the present embodiment.

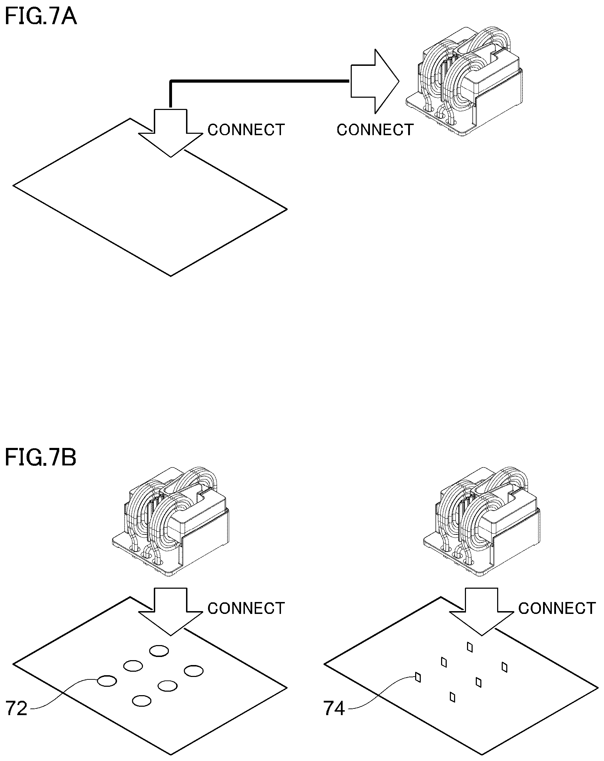

Now, a method for mounting the composite coil onto a circuit board or the like will be described. FIG. 7A illustrates a case where the composite coil is not directly connected to a printed circuit board, while FIG. 7B illustrates a case where the composite coil is directly connected to a printed circuit board. Since the composite coil according to the present embodiment has a reduced size, it can be mounted on the printed circuit board. If the composite coil is larger, it cannot be mounted on the printed circuit board, as shown in FIG. 7A. As shown in FIG. 7B, the composite coil according to the present embodiment can be directly placed on the printed circuit board using vias 72 (left diagram) or tab terminals 74 (right diagram) provided on the board. This direct mounting on the printed circuit board helps reduce the size of the power conversion apparatus.

### (Second Embodiment)

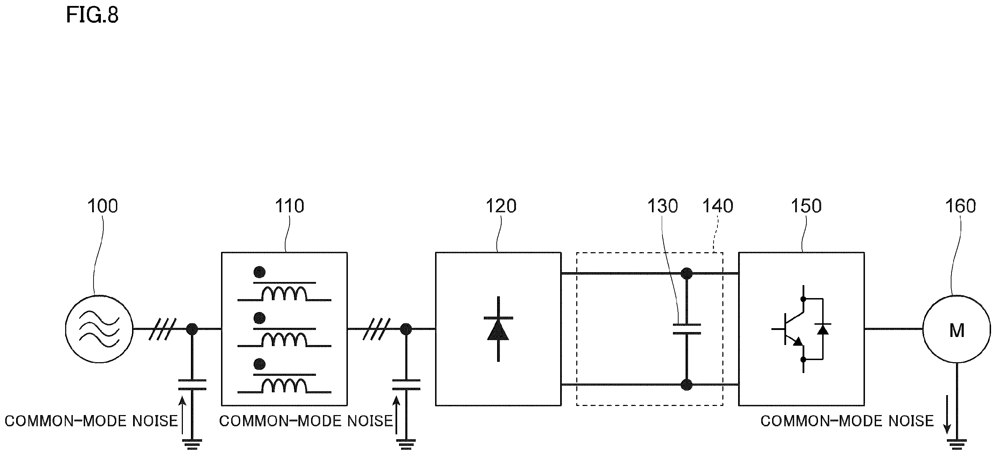

FIG. 8 illustrates an example circuit configuration of the power conversion apparatus in which a second capacitor is disposed. The power conversion apparatus shown in FIG. 8 has a circuit configuration in which a second capacitor is disposed on both the input and output sides of each phase of the composite coil 110, where the second capacitor is connected at its one end to the composite coil and is grounded at its other end. In this case, the second capacitor may be grounded via a third capacitor (not shown). The presence of the common-mode capacitor (the second capacitor) functioning as a common-mode filter serves to prevent the common-mode noise from flowing out to the power source side.

The power conversion apparatus of the present disclosure includes a capacitor other than an electrolytic capacitor. For example, the capacitor is a film capacitor or a ceramic capacitor. Film capacitors and ceramic capacitors have excellent high-frequency characteristics, contributing to longer service life and improved reliability of the power conversion apparatus.

### (Normal-Mode Inductance of Composite Coil)

Here, the normal-mode inductance values of the composite coils of the first and second embodiments will be described.

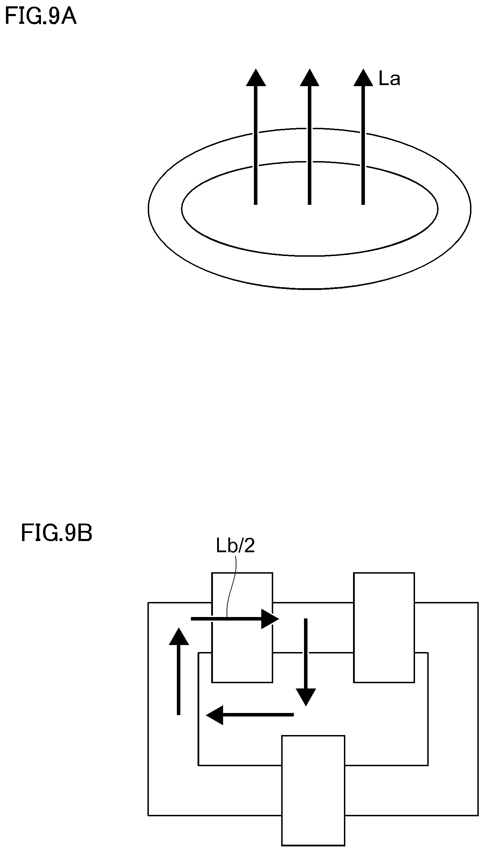

FIG. 9A illustrates an air-core coil. FIG. 9B illustrates the leakage inductance. FIG. 9A conceptually illustrates the inductance assuming that the composite coil is an air-core coil. FIG. 9B conceptually illustrates passage of the magnetic flux through air and magnetic material when a nanocrystalline material is used as the magnetic core material of the composite coil. When the inductance of one phase winding in an air-core condition is defined as La, and the total inductance corresponding to two phases of the normal-mode inductance is defined as Lb, the following Equation (5) holds. $Lb > 2 \times La$

Equation (5) indicates that the normal-mode inductance can be made larger when using leakage inductance than when using an air-core configuration.

The power conversion apparatus according to the present embodiment is used, for example, in an air conditioner. A compressor motor is provided in the air conditioner to, for example, drive a compressor installed in a refrigerant circuit of the air conditioner. Incorporating the power conversion apparatus according to the present embodiment into the air conditioner makes it possible to provide a smaller, lighter, and more cost-effective air conditioner.

### <Advantageous Effects>

The power conversion apparatus 1 of the present disclosure includes: the rectifier circuit 120 configured to rectify AC power from the three-phase AC power source 100; the inverter circuit 150 configured to modulate the voltage rectified by the rectifier circuit 120 based on a carrier frequency fc, convert it back to a voltage of a predetermined frequency, and apply it to the motor 160 whose maximum power consumption Pmax is 2 kW or more; the capacitor 130 provided between the rectifier circuit 120 and the inverter circuit 150 and having a capacitance Cn satisfying Equations (1) and (2) with respect to the AC voltage Vac of the three-phase AC power source 100 and the maximum power consumption Pmax; and the composite coil 110 provided between the three-phase AC power source 100 and the capacitor 130. The carrier frequency is 17.7 kHz or higher. The composite coil 110 includes a plurality of windings wound around the winding section of a core and has a common-mode inductance component that functions as a common-mode choke coil and a normal-mode inductance component that functions as a normal-mode choke coil. The coupling coefficient between the windings of respective phases of the composite coil 110 is 0.85 or more and less than 1, and the composite coil 110 has the normal-mode inductance component Ln satisfying Equation (3): ${C}_{n} \leq 350 \times {10}^{- 6} \times \frac{{P}_{max}}{{V}_{ac}^{2}}$ $100 \times {10}^{- 6} \times \frac{{P}_{max}}{{V}_{ac}^{2}} \leq {C}_{n}$ $\frac{1}{2 π \sqrt{{L}_{n} {C}_{n}}} \leq K ⋅ {f}_{c}$ where K = 0.25.

This feature makes it possible to provide a smaller power conversion apparatus 1 and the like.

The only coils that are present between the three-phase AC power source 100 and the capacitor 130 are either the composite coil 110 alone, or the composite coil 110 together with a coil having a plurality of windings wound around a core. This feature, achieved by the use of the composite coil 110, makes it possible to eliminate a coil having only normal-mode inductance between the AC power source 100 and the capacitor 130.

The (L-I) characteristic of the normal-mode inductance of the composite coil 110 is such that the value of the normal-mode inductance corresponding to the value of the input current to the power conversion apparatus 1 at the time when the overcurrent protection of the inverter circuit 150 is activated is 90% or more of the value of the normal-mode inductance corresponding to the value of the input current I1 to the power conversion apparatus 1 at the time of maximum power consumption, the input current I1 being expressed by Equation (4) assuming a power factor φ = 0.95: $I 1 = \frac{Pmax}{\sqrt{3 VacΦ}}$

This feature enables the composite coil 110 to maintain its normal-mode inductance even when a current twice the rated current flows through it, as the leakage flux passes through air and therefore does not cause magnetic saturation.

The windings of respective phases of the composite coil 110 are made of the same material and have the same wire diameter, and are wound around the winding section of the core while being separated from each other. This feature makes it possible to reduce the coupling coefficient between the windings of respective phases of the composite coil 110.

The capacitor 130 is a film capacitor or a ceramic capacitor. This feature makes it possible to provide a capacitor with excellent high-frequency characteristics.

When the inductance of one phase winding of the composite coil 110 in an air-core condition is defined as La, the total inductance Lb corresponding to two phases of the normal-mode inductance of the composite coil is given by Equation (5): $Lb > 2 \times La$

This feature makes it possible to achieve a higher normal-mode inductance than the air--core La by utilizing leakage flux.

The motor 160 is mounted in a compressor of an air conditioner. This feature makes it possible to provide a smaller, lighter, and more cost-effective air conditioner.

The present disclosure also provides an air-conditioning apparatus equipped with the power conversion apparatus 1. This feature makes it possible to provide a smaller, lighter, and more cost-effective air conditioner.

Although exemplary embodiments have been described above, the technical scope of the present disclosure is not limited to the scope described in the above embodiments. It will be apparent from the appended claims that combinations of two or more of the above exemplary embodiments, as well as various changes or improvements to the above exemplary embodiments, are also within the technical scope of the present disclosure.

### Reference Signs List

1 Power conversion apparatus
11 Conventional power conversion apparatus
72 Via
74 Tab terminal
100 AC power source
110 Composite coil
112 Common-mode choke coil
114 Normal-mode choke coil
120 Rectifier circuit
130 Capacitor
140 DC link section
150 Inverter circuit
160 Motor
600 AC power source
610 Common-mode choke coil
620 Rectifier circuit
630 Reactor
635 Capacitor
640 DC link section
650 Inverter circuit
660 Motor

## Claims

1. A power conversion apparatus comprising:
a rectifier circuit configured to rectify alternating current (AC) power from a three-phase AC power source;
an inverter circuit configured to modulate a voltage rectified by the rectifier circuit based on a carrier frequency fc ([Hz]), convert the rectified voltage back to a voltage of a predetermined frequency, and apply the voltage to a motor having a maximum power consumption Pmax ([W]) of 2 kW or more;
a capacitor provided between the rectifier circuit and the inverter circuit, the capacitor having a capacitance Cn ([F]) satisfying Equations (1) and (2) with respect to an AC voltage Vac ([V]) of the three-phase AC power source and the maximum power consumption Pmax; and
a composite coil provided between the three-phase AC power source and the capacitor, wherein
the carrier frequency fc is 17.7 kHz or higher,
the composite coil includes a plurality of windings wound around a winding section of a core and has a common-mode inductance component that functions as a common-mode choke coil and a normal-mode inductance component that functions as a normal-mode choke coil,
a coupling coefficient between the windings of respective phases of the composite coil is 0.85 or more and less than 1, and
the composite coil has the normal-mode inductance component Ln ([H]) satisfying Equation (3): ${C}_{n} \leq 350 \times {10}^{- 6} \times \frac{{P}_{max}}{{V}_{ac}^{2}}$ $100 \times {10}^{- 6} \times \frac{{P}_{max}}{{V}_{ac}^{2}} \leq {C}_{n}$ $\frac{1}{2 π \sqrt{{L}_{n} {C}_{n}}} \leq K ⋅ {f}_{c}$
where K = 0.25.

2. The power conversion apparatus according to claim 1, wherein only coils that are present between the three-phase AC power source and the capacitor are either the composite coil alone, or the composite coil together with a coil having a plurality of windings wound around a core.

3. The power conversion apparatus according to claim 1, wherein an (L-I) characteristic of normal-mode inductance of the composite coil is such that a value of the normal-mode inductance corresponding to a value of input current to the power conversion apparatus at the time when overcurrent protection of the inverter circuit is activated is 90% or more of a value of the normal-mode inductance corresponding to a value of input current I1 ([A]) to the power conversion apparatus at the time of maximum power consumption, the input current I1 being expressed by Equation (4) assuming a power factor φ = 0.95: $I 1 = \frac{Pmax}{\sqrt{3 VacΦ}}$

4. The power conversion apparatus according to claim 1, wherein the windings of respective phases of the composite coil are made of a same material and have a same wire diameter, and are wound around the winding section of the core while being separated from each other.

5. The power conversion apparatus according to claim 1, wherein the capacitor is a film capacitor or a ceramic capacitor.

6. The power conversion apparatus according to claim 1, wherein, when inductance of one phase winding of the composite coil in an air-core condition is defined as La, total inductance Lb corresponding to two phases of the normal-mode inductance of the composite coil is given by Equation (5): $Lb > 2 \times La$

7. The power conversion apparatus according to claim 1, wherein the motor is mounted in a compressor of an air conditioner.

8. An air-conditioning apparatus equipped with the power conversion apparatus according to any one of claims 1 to 7.
